# EUROPEAN PATENT APPLICATION

(11) **EP 4 852 025 A1**
(43) Date of publication of application: **09.12.2026**
(21) Application number: 25861972.5
(22) Date of filing: 29.04.2025
(51) Int. Cl.: H01B 7/14, H01B 7/17

(54) **SUBMARINE CABLE FOR ULTRA-SHALLOW WATER AND PREPARATION METHOD FOR ARMOR COMPOSITE LAYER**

(30) Priority: 06.09.2024 CN 202411256468
(71) Applicant: Zhongtian Technology Submarine Cable Co., Ltd., Nantong, Jiangsu 226000 (CN); Jiangsu Zhongtian Technology Co., Ltd., Nantong, Jiangsu 226000 (CN); South Sea Submarine Cable Co., Ltd., Shanwei, Guangdong 516545 (CN); Zhongtian Dafeng Submarine Cable Co., Ltd., Jiangsu 224145 (CN); Shandong Offshore Engineering Cable & Wire Co., Ltd., Weihai, Shandong 264515 (CN)
(72) Inventor: ZHANG, Tianyi, Nantong, Jiangsu 226000 (CN); YE, Jinyu, Nantong, Jiangsu 226000 (CN); HU, Ming, Nantong, Jiangsu 226000 (CN); ZHANG, Hongliang, Nantong, Jiangsu 226000 (CN); QIAO, Jing, Nantong, Jiangsu 226000 (CN)
(74) Representative: Boult Wade Tennant LLP
(86) International application number: PCT/CN2025/092030
(87) International publication number: WO 2026/051387

(57) **Abstract**

The present invention relates to the technical field of dynamic submarine cables, and provides a submarine cable for ultra-shallow water and a preparation method of an armored composite layer. The submarine cable for ultra-shallow water includes a cable core structure, a filling strip, an optical unit, an inner sheath and an armored composite layer. The cable core structure is filled with filling strip during cabling and twisting, and the optical unit is arranged in part of the filling strip. After the cable core structure, the filling strip and the optical unit are formed into a cable, the inner sheath is wrapped around an outer layer thereof, and the armored composite layer is provided on an outer side of the inner sheath. The armored composite layer includes a braided armor layer and a polymer matrix. The braided armor layer is braided by a plurality of armor wires; the polymer matrix is coated on the braided armor layer, fills pores of the braided armor layer, and is integrally formed with the braided armor layer. The submarine cable for ultra-shallow water of the present invention has reduced minimum bending radius, and can also form a dense solid body to improve the longitudinal water-blocking capability and the lateral pressure resistance, thereby achieving the usage requirements of the submarine cable for large offset in ultra-shallow water, as well as good fatigue resistance.

## Description

The present application claims priority to Chinese Patent Application No. 202411256468.7 filed with China National Intellectual Property Administration on September 6, 2024 and entitled "SUBMARINE CABLE FOR ULTRA-SHALLOW WATER AND PREPARATION METHOD OF ARMORED COMPOSITE LAYER", which is hereby incorporated by reference in its entirety.

### TECHNICAL FIELD

The present invention relates to the technical field of dynamic submarine cables, and in particular, to a submarine cable for ultra-shallow water and a preparation method of an armored composite layer.

### BACKGROUND

In the new energy system, wind power and photovoltaic technologies develop rapidly. The global potential capacity of offshore photovoltaics is about 4000 GW. China has a long coastline, and the theoretical installable capacity of offshore photovoltaics exceeds 70 GW. As power transmission equipment for floating wind power and photovoltaics, dynamic submarine cables are in great demand.

At present, conventional dynamic submarine cables existing in China are generally applied at a water depth of more than 30 meters, with a platform offset no more than half of the water depth; and do not need to cope with floating ice. Therefore, under extreme harsh working conditions where the water depth is less than 10 meters and the platform offset is no less than 10 meters, existing dynamic submarine cables are prone to excessive bending and fracture, or excessive straightening and snapping. In addition, dynamic submarine cables are not designed with floating ice resistance, and are easily damaged in winter when floating ice is thick and lasts for a long time.

### SUMMARY

The present invention provides a submarine cable for ultra-shallow water and a preparation method of an armored composite layer, so as to solve the problem in the prior art that submarine cables have poor bending resistance and floating ice resistance in ultra-shallow water areas.

To solve the above technical problems, the present invention is implemented as follows.

In a first aspect, the present invention provides a submarine cable for ultra-shallow water, including: a cable core structure, a filling strip, an optical unit, an inner sheath and an armored composite layer;
the cable core structure is filled with the filling strip during cabling and twisting; the optical unit is arranged in part of the filling strip; after the cable core structure, the filling strip and the optical unit are formed into a cable, an outer layer thereof is wrapped with the inner sheath, and the armored composite layer is provided on an outer side of the inner sheath;
where the armored composite layer includes a braided armor layer and a polymer matrix; the braided armor layer is braided by a plurality of armor wires; and the polymer matrix is coated on the braided armor layer, fills pores of the braided armor layer, and is integrally formed with the braided armor layer.

According to the submarine cable for ultra-shallow water provided by the present invention, the braided armor layer is a metal-composite-fiber-braided armor layer;
the metal-composite-fiber-braided armor layer is braided by a metal composite fiber, and the-metal-composite-fiber-braided armor layer is in a mesh shape.

According to the submarine cable for ultra-shallow water provided by the present invention, the metal composite fiber includes a central wire and a metal wire, and the metal wire is wound around the central wire.

According to the submarine cable for ultra-shallow water provided by the present invention, a material of the central wire includes aramid, nylon, carbon fiber, titanium alloy, copper wire, aluminum alloy wire or stainless steel wire; a material of the metal wire includes pure copper wire, tinned copper wire, aluminum alloy wire, stainless steel wire or titanium alloy wire.

According to the submarine cable for ultra-shallow water provided by the present invention, the metal composite fiber has a diameter of 0.1 mm to 3 mm and a tensile strength of ≥5 kg;
and/or, the metal-composite-fiber-braided armor layer has a thickness of 0.3 mm to 5 mm, a braiding density of ≥90%, a pitch of 50 mm to 500 mm, and an inner diameter of 20 mm to 150 mm.

According to the submarine cable for ultra-shallow water provided by the present invention, a material of the polymer matrix includes high-density polyethylene, medium-density polyethylene or linear low-density polyethylene.

According to the submarine cable for ultra-shallow water provided by the present invention, it further includes a cushion layer;
the cushion layer is sandwiched between the armored composite layer and the inner sheath.

According to the submarine cable for ultra-shallow water provided by the present invention, the cable core structure includes a water-blocking conductor, an insulating layer, a metal shielding layer and an inner protective layer;
a plurality of water-blocking conductors are provided, and the plurality of water-blocking conductors, the insulating layer, the metal shielding layer and the inner protective layer are arranged in sequence from inside to outside.

In a second aspect, the present invention provides a preparation method of an armored composite layer of a submarine cable for ultra-shallow water, including:
extruding a polymer matrix on an outside of an armor wire;
tightly braiding a plurality of armor wires each having a polymer matrix extruded thereon to form a braided armor layer;
subjecting the braided armor layer with extruded polymer matrix to a heat treatment, such that the polymer matrix is melted and bonded with the braided armor layer to form an integral body.

According to the preparation method of the armored composite layer of the submarine cable for ultra-shallow water provided by the present invention, the subjecting the braided armor layer with extruded polymer matrix to the heat treatment includes:
feeding the braided armor layer with extruded polymer matrix into a hot oven to undergo the heat treatment.

According to the submarine cable for ultra-shallow water and the preparation method of the armored composite layer provided by the present invention, by providing the armored composite layer on the outer side of the inner sheath, where the armored composite layer includes the braided armor layer and the polymer matrix, a plurality of armor wires are braided to form the braided armor layer, the polymer matrix coats the braided armor layer and fills the pores of the braided armor layer, such that the braided armor layer and the polymer matrix are integrally arranged. The braided armor layer can enable the submarine cable to maintain its own shape and structure when it bends, ensuring that the submarine cable will not be excessively bent or broken, and allowing the submarine cable to bend safely under a smaller radius, thereby reducing the minimum bending radius of the submarine cable. Moreover, the coating and filling of the braided armor layer with the polymer matrix can form a dense solid body, improving the longitudinal water-blocking ability and the lateral pressure resistance, thereby achieving the usage requirements of the submarine cable for large offset in ultra-shallow water, as well as good fatigue resistance.

### BRIEF DESCRIPTION OF DRAWINGS

To more clearly illustrate the technical solutions of the present invention or the prior art, a brief introduction will be given below to the accompanying drawings required for describing the embodiments or the prior art. Apparently, the accompanying drawings in the following description show some embodiments of the present invention, and for those of ordinary skill in the art, other drawings can also be obtained from these drawings without any creative effort.
FIG. 1 is a schematic cross-sectional structural diagram of a submarine cable for ultra-shallow water according to the present invention.
FIG. 2 is a schematic structural diagram of an armored composite layer according to the present invention.
FIG. 3 is a schematic structural diagram of a braided armor layer according to the present invention.
FIG. 4 is a schematic cross-sectional structural diagram of a cable core structure according to the present invention.
FIG. 5 is a schematic flow chart of a preparation method of an armored composite layer according to the present invention.

Explanation of reference signs:
1: cable core structure; 11: water-blocking conductor; 12: insulating layer; 13: metal shielding layer; 14: inner protective layer; 2: filling strip; 3: optical unit; 4: inner sheath; 5: armored composite layer; 51: braided armor layer; 52: polymer matrix; 511: central wire; 512: metal wire; 6: cushion layer.

### DESCRIPTION OF EMBODIMENTS

In order to make the objectives, technical solutions and advantages of the present invention clearer, the technical solutions of the present invention will be described clearly and completely below with reference to the drawings of the present invention. Obviously, the described embodiments are part of the embodiments of the present invention, rather than all of the embodiments. Based on the embodiments of the present invention, all other embodiments obtained by those of ordinary skill in the art without creative efforts fall within the protection scope of the present invention.

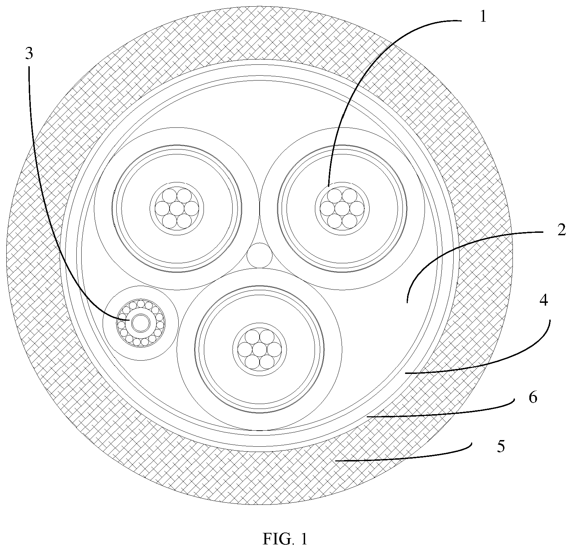

The submarine cable for ultra-shallow water and the preparation method of the armored composite layer provided by the embodiments of the present invention will be described in detail below with reference to FIGS. 1-5 through specific embodiments and application scenarios thereof.

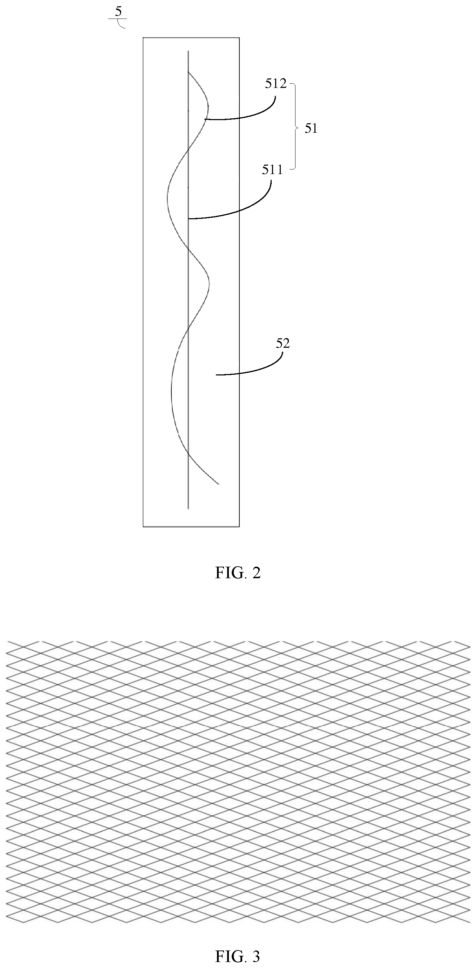

In a first aspect, as shown in FIG. 1 and FIG. 2, this embodiment provides a submarine cable for ultra-shallow water, including: a cable core structure 1, a filling strip 2, an optical unit 3, an inner sheath 4 and an armored composite layer 5.

The cable core structure 1 is filled with the filling strip 2 during cabling and twisting, and the optical unit 3 is arranged in part of the filling strip 2. After the cable core structure 1, the filling strip 2 and the optical unit 3 are formed into a cable, an outer layer of the cable is wrapped with the inner sheath 4, and the armored composite layer 5 is provided on an outer side of the inner sheath 4.

Where, the armored composite layer 5 includes a braided armor layer 51 and a polymer matrix 52, the braided armor layer 51 is braided by a plurality of armor wires, and the polymer matrix 52 coats the braided armor layer 51, fills pores of the braided armor layer 51, and is integrally formed with the braided armor layer 51.

It can be understood that the submarine cable is applied to a dynamic cable system of a floating photovoltaic platform at sea and inland lakes, or to a dynamic submarine cable system for connection between floating wind turbine units in a floating wind farm, or to a dynamic submarine cable system for offshore oil and gas, or to a dynamic submarine cable system used in new energy power generation platforms such as wave energy generation. When the application water depth is shallow, the submarine cable bears greater bending force, and the working condition is worse.

In this embodiment, a filling strip 2 is provided in a cabling gap of the cable core structure 1, where a filling strip 2 compatible with the insulating material of the submarine cable and suitable for the operation of the submarine cable is adopted. A material of the filling strip 2 includes high-density polyethylene, medium-density polyethylene, linear low-density polyethylene or polypropylene. The filling strip 2 is in a shape of solid or hollow sector, and a hole is provided in the middle of the filling strip for placing the optical unit 3. The filling strip 2 matches the cable core structure 1 in terms of size.

In this embodiment, the inner sheath 4 wraps around a cabled structure formed by the cable core structure 1, the filling strip 2 and the optical unit 3, providing fixed and stable support for the cable core structure 1, the filling strip 2 and the optical unit 3. A material of the inner sheath 4 includes high-density polyethylene, medium-density polyethylene, linear low-density polyethylene or polyurethane.

Further, in this embodiment, the armored composite layer 5 is composed of the braided armor layer 51 and the polymer matrix 52 coated on the braided armor layer 51. The braided armor layer 51 is braided by a metal wire 512 or a non-metal wire 512. When the submarine cable is subjected to bending force, the braided armor layer 51 can evenly distribute the stress, avoiding the stress focus on a certain point that causes damage to the submarine cable. Moreover, the braided armor layer 51 enables the submarine cable to maintain its own shape and structure during bending, thereby allowing the submarine cable to bend safely under a smaller radius, and effectively reducing the minimum bending radius of the submarine cable. At the same time, since the braided armor layer 51 is coated with the polymer matrix 52 and the pores of the braided armor layer 51 are filled with the polymer matrix 52 to form a dense solid body, the longitudinal water-blocking property and lateral pressure resistance of the submarine cable are increased, thereby being able to resist the impact of floating ice in winter or under low temperature.

According to the submarine cable for ultra-shallow water provided by the present invention, the armored composite layer 5 is provided on the outer side of the inner sheath 4, where the armored composite layer 5 includes the braided armor layer 51 and the polymer matrix 52, a plurality of armor wires are braided to form the braided armor layer 51, and the polymer matrix 52 coats the braided armor layer 51 and fills the pores of the braided armor layer 51, such that the braided armor layer 51 and the polymer matrix 52 are integrally arranged. The braided armor layer 51 can enable the submarine cable to maintain its own shape and structure during bending, ensuring that the submarine cable will not be excessively bent or broken, and allowing the submarine cable to bend safely under a smaller radius, thereby reducing the minimum bending radius of the submarine cable. Moreover, the coating and filling of the braided armor layer 51 with the polymer matrix 52 can form a dense solid body, improving the longitudinal water-blocking ability and the lateral pressure resistance, thereby achieving the usage requirements of the submarine cable for large offset in ultra-shallow water , as well as good fatigue resistance.

In some embodiments, as shown in FIG. 2 and FIG. 3, the braided armor layer 51 of this embodiment is a metal-composite-fiber-braided armor layer.

The metal-composite-fiber-braided armor layer is braided by a metal composite fiber, and the metal-composite-fiber-braided armor layer is in a mesh shape.

It can be understood that, since the metal composite fiber has good low-temperature performance and can still maintain mechanical strength and ductility at low temperature, a mesh-shaped armor layer braided wtih the metal composite fiber can meet the low-temperature requirements in a floating ice environment. Moreover, the metal composite fiber can also maintain high tensile strength, helping to resist the impact of floating ice.

In some embodiments, as shown in FIG. 2, the metal composite fiber of this embodiment includes a central wire 511 and a metal wire 512, and the metal wire 512 is wound around the central wire 511.

It can be understood that, in this embodiment, a high-strength metal wire is selected as the central wire 511, and one metal wire 512 is tightly wound around the central wire 511. Specifically, the material of the central wire 511 includes aramid, nylon, carbon fiber, titanium alloy, copper wire, aluminum alloy wire or stainless steel wire; the material of the metal wire 512 includes pure copper wire, tinned copper wire, aluminum alloy wire, stainless steel wire or titanium alloy wire. The metal wire 512 is tightly and spirally wound around the central wire 511 to obtain the metal composite fiber. The metal-composite-fiber-braided armor layer is obtained by mesh braiding of the metal wire 512 relative to the central wire 511.

In some embodiments, the metal composite fiber of this embodiment has a diameter of 0.1 mm to 3 mm and a tensile strength of ≥5 kg.

It can be understood that, in this embodiment, the diameter of the central wire 511 and the metal wire 512 ranges from 0.1 mm to 3 mm, and the tensile strength of the central wire 511 and the metal wire 512 is ≥5 kg, ensuring that the central wire 511 and the metal wire 512 have small diameter and high tensile strength.

In some embodiments, the metal-composite-fiber-braided armor layer has a thickness of 0.3 mm to 5 mm, a braiding density of ≥90%, a pitch of 50 mm to 500 mm, and an inner diameter of 20 mm to 150 mm.

It can be understood that the thickness of the metal-composite-fiber-braided armor layer refers to the dimension of a protective layer formed by the armor layer outside the submarine cable; and in this embodiment, the thickness is 0.3 mm to 5 mm. The braiding density refers to the coverage degree of the armor layer per unit length or per unit area; and in this embodiment, the braiding density is ≥ 90%, ensuring the compactness and shielding effect of the submarine cable. The pitch of the armor layer refers to the distance between two adjacent layers of armor material when the armor layer material is wrapped on the inner sheath 4; and in this embodiment, the pitch is 50 mm to 500 mm, ensuring the mechanical protection and electrical performance of the submarine cable. In this embodiment, the inner diameter of the armor layer is 20 mm to 150 mm, which is adapted to the outer diameter of the inner sheath 4 to tightly fit the inner sheath 4 and provide uniform protection.

In some embodiments, as shown in FIG. 2, the material of the polymer matrix 52 of this embodiment includes high-density polyethylene, medium-density polyethylene or linear low-density polyethylene.

It can be understood that the polymer matrix 52 of this embodiment includes polyethylene of different densities and polyurethane. During the processing of the submarine cable, it can be extruded on the metal-composite-fiber-braided armor layer, and when heated, it melts and bonds with the armor layer to form an integral body, coating the outer side of the armor layer and filling the pores of the braided layer, so that the armor layer and the polymer matrix 52 form a dense solid body.

Based on the thermoplasticity of polyethylene, polyethylene becomes soft and ductile when heated and becomes hard after cooling, which is beneficial for melting with the armor layer during heating and forming a dense solid body with the armor layer after cooling.

In some embodiments, as shown in FIG. 1, the submarine cable for ultra-shallow water of this embodiment further includes a cushion layer 6.

The cushion layer 6 is sandwiched between the armored composite layer 5 and the inner sheath 4.

It can be understood that, in this embodiment, by arranging the cushion layer 6 between the armored composite layer 5 and the inner sheath 4, the inner sheath 4 can be quickly peeled off through the cushion layer 6. Moreover, an anchoring clamp can be provided on the cushion layer 6 to fix the armored composite layer 5, meeting the demand for quickly anchoring the armor layer.

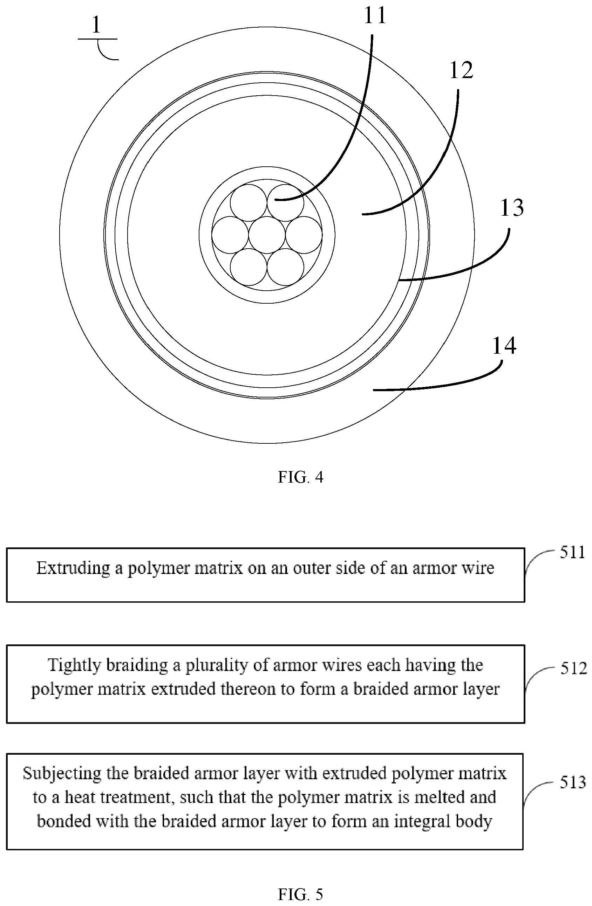

In some embodiments, as shown in FIG. 4, the cable core structure 1 of this embodiment includes a water-blocking conductor 11, an insulating layer 12, a metal shielding layer 13 and an inner protective layer 14.

A plurality of water-blocking conductors 11 are provided, and the plurality of water-blocking conductors 11, the insulating layer 12, the metal shielding layer 13 and the inner protective layer 14 are arranged in sequence from inside to outside.

It can be understood that, in this embodiment, the water-blocking conductor 11 is filled with a water-blocking tape or water-blocking glue during twisting, which can meet the water-blocking requirement for a water depth of 4000 m. Moreover, the water-blocking tape adopts two layers of seawater-blocking type water-blocking tape. The material of the inner protective layer 14 includes high-density polyethylene, medium-density polyethylene, linear low-density polyethylene or polyurethane, so as to meet the protective strength for the water-blocking conductor 11, the insulating layer 12 and the metal shielding layer 13.

Specifically, the number of water-blocking conductor 11 is not less than two, and may be three or more.

In a second aspect, in some embodiments, as shown in FIG. 5, this embodiment provides a preparation method of an armored composite layer of the submarine cable for ultra-shallow water, including the following steps:
Step 511: extruding a polymer matrix on an outer side of an armor wire;
Step 512: tightly braiding a plurality of armor wires each having the polymer matrix extruded thereon to form a braided armor layer;
Step 513: subjecting the braided armor layer with the extruded polymer matrix to a heat treatment, such that the polymer matrix is melted and bonded with the braided armor layer to form an integral body.

It can be understood that the preparation method of the armored composite layer of this embodiment includes: first, extruding a polymer matrix on the outer side of an armor wire. In some examples, on the outer side of the metal composite fiber, the polymer matrix is heated and melted by an extruder and then extruded through a die to form a uniform tubular or strip-shaped covering layer, which is tightly attached to the outer side of the metal composite fiber. Then, the metal composite fiber with extruded polymer matrix is braided into a mesh structure, where a braiding machine is used to braid the metal composite fiber with extruded polymer matrix at high density to form the braided armor layer. Finally, the braided armor layer with the extruded polymer matrix is subjected to a heat treatment, and the polymer matrix melts on the braided armor layer, integrates with the braided armor layer, and fills in the pores of the braided armor layer, thereby making the braided armor layer and the polymer matrix form a dense solid body. The dense solid body provides additional impact resistance, tensile resistance and compression resistance, can improve the overall stability and rigidity of the submarine cable, and enhances the longitudinal water-blocking ability and lateral pressure resistance.

In some embodiments, as shown in FIG. 5, the method of subjecting the braided armor layer with extruded polymer matrix to the heat treatment in this embodiment includes:
feeding the braided armor layer with extruded polymer matrix into a hot oven to undergo the heat treatment.

It can be understood that this embodiment uses a hot oven to perform heat-treatment on the braided armor layer and the polymer matrix. Since the oven can accurately control the heating temperature and heating time and provide a uniform thermal field, the braided armor layer and the polymer matrix can be heated stably and continuously in the oven, so that the effect of the dense solid body formed by the polymer matrix and the braided armor layer is better.

Finally, it should be noted that the above embodiments are only used to illustrate the technical solutions of the present invention, rather than to limit them. Although the present invention has been described in detail with reference to the foregoing embodiments, those of ordinary skill in the art should understand that they can still modify the technical solutions described in the foregoing embodiments, or make equivalent substitutions to some of the technical features. However, these modifications or substitutions do not make the essence of the corresponding technical solutions depart from the spirit and scope of the technical solutions of the embodiments of the present invention.

## Claims

1. A submarine cable for ultra-shallow water, comprising: a cable core structure, a filling strip, an optical unit, an inner sheath and an armored composite layer; wherein
the cable core structure is filled with the filling strip during cabling and twisting; the optical unit is arranged in part of the filling strip; after the cable core structure, the filling strip and the optical unit are formed into a cable, an outer layer thereof is wrapped with the inner sheath, and the armored composite layer is provided on an outer side of the inner sheath;
wherein the armored composite layer comprises a braided armor layer and a polymer matrix, the braided armor layer is braided by a plurality of armor wires, and the polymer matrix is coated on the braided armor layer, fills pores of the braided armor layer, and is integrally formed with the braided armor layer.

2. The submarine cable for ultra-shallow water according to claim 1, wherein the braided armor layer is a metal-composite-fiber-braided armor layer;
the metal-composite-fiber-braided armor layer is braided by a metal composite fiber, and the metal-composite-fiber-braided armor layer is in a mesh shape.

3. The submarine cable for ultra-shallow water according to claim 2, wherein the metal composite fiber comprises a central wire and a metal wire, and the metal wire is wound around the central wire.

4. The submarine cable for ultra-shallow water according to claim 3, wherein a material of the central wire comprises aramid, nylon, carbon fiber, titanium alloy, copper wire, aluminum alloy wire or stainless steel wire; and a material of the metal wire comprises pure copper wire, tinned copper wire, aluminum alloy wire, stainless steel wire or titanium alloy wire.

5. The submarine cable for ultra-shallow water according to claim 2, wherein the metal composite fiber has a diameter of 0.1 mm to 3 mm and a tensile strength of ≥5 kg;
and/or, the metal-composite-fiber-braided armor layer has a thickness of 0.3 mm to 5 mm, a braiding density of ≥90%, a pitch of 50 mm to 500 mm, and an inner diameter of 20 mm to 150 mm.

6. The submarine cable for ultra-shallow water according to claim 1, wherein a material of the polymer matrix comprises high-density polyethylene, medium-density polyethylene or linear low-density polyethylene.

7. The submarine cable for ultra-shallow water according to claim 1, further comprising a cushion layer; wherein
the cushion layer is sandwiched between the armored composite layer and the inner sheath.

8. The submarine cable for ultra-shallow water according to claim 1, wherein the cable core structure comprises a water-blocking conductor, an insulating layer, a metal shielding layer and an inner protective layer;
a plurality of water-blocking conductors are provided, and the plurality of water-blocking conductors, the insulating layer, the metal shielding layer and the inner protective layer are arranged in sequence from inside to outside.

9. A preparation method of an armored composite layer of the submarine cable for ultra-shallow water according to any one of claims 1 to 8, comprising:
extruding a polymer matrix on an outer side of an armor wire;
tightly braiding a plurality of armor wires each having the polymer matrix extruded thereon to form a braided armor layer;
subjecting the braided armor layer with extruded polymer matrix to a heat treatment, such that the polymer matrix is melted and bonded with the braided armor layer to form an integral body.

10. The preparation method of the armored composite layer according to claim 9, wherein the subjecting the braided armor layer with extruded polymer matrix to the heat treatment comprises:
feeding the braided armor layer with the extruded polymer matrix into a hot oven to undergo the heat treatment.
